# EUROPEAN PATENT APPLICATION

(11) **EP 4 694 345 A1**
(43) Date of publication of application: **11.02.2026**
(21) Application number: 24784905.2
(22) Date of filing: 02.04.2024
(51) Int. Cl.: H04W 36/04, H04W 16/32, H04W 36/18, H04W 36/28, H04W 72/0457, H04W 92/20

(54) **MASTER NODE AND COMMUNICATION METHOD**

(30) Priority: 07.04.2023 JP 2023062951
(71) Applicant: DENSO CORPORATION, Kariya-city, Aichi 448-8661 (JP)
(72) Inventor: MAEMOTO, Daiki, Kariya- city, Aichi 4488661 (JP)
(74) Representative: TBK
(86) International application number: PCT/JP2024/013589
(87) International publication number: WO 2024/210120

(57) **Abstract**

A master node according to an embodiment is a master node (200, 200M) connected to a communication apparatus (100). The master node comprises a controller (230) configured to control a procedure for the communication apparatus to perform a conditional PS cell change based on a primary secondary (PS) cell configuration, a receiver (212) configured to receive a radio resource control (RRC) reconfiguration complete message based on the conditional PS cell change from the communication apparatus, and a transmitter (221). In the procedure, the transmitter is configured to transmit a modification request message to a source secondary node when the receiver receives the RRC reconfiguration complete message and the source secondary node is a candidate secondary node, and is configured to transmit a release request message to the source secondary node when the receiver receives the RRC reconfiguration complete message and the source secondary node is not a candidate secondary node.

## Description

### Cross-Reference to Related Application

This application is based on and claims the benefit of priority from Japanese Patent Application No. 2023-062951, filed on April 7, 2023, the entire contents of which are incorporated herein by reference.

### Technical Field

The present disclosure relates to a master node and a communication method.

### Background Art

In a mobile communication system conforming to the technical specification of the 3rd Generation Partnership Project (hereinafter, 3GPP (registered trademark)), which is a standardization project of a mobile communication system, dual connectivity (DC) has been introduced. In the DC, a communication apparatus communicates with a master node (also referred to as a "master base station") and a secondary node (also referred to as a "secondary base station").

The 3GPP technical specification defines primary secondary cell (PS cell) change (see Non-Patent Literature 1). As one procedure of changing the PS cell, there is a conditional PS cell change (CPC) procedure. In the CPC procedure, the communication apparatus can change a candidate secondary node among a plurality of candidate secondary nodes to a candidate secondary node that controls a cell in which an execution condition is fulfilled based on a configuration related to the plurality of candidate secondary nodes (hereinafter, referred to as CPC configuration as appropriate). As a result, the communication apparatus can switch the secondary node from the source secondary node to the target secondary node without an instruction from the master node.

Here, in the current 3GPP technical specification, when the communication apparatus changes the secondary node (source secondary node) to another secondary node (target secondary node) based on the CPC configuration, the master node transmits a release request message (specifically, SN Release Request message) for requesting release of the resource associated with the communication apparatus to a related node other than the target secondary node (for example, a source secondary node and a potential secondary node that could be the target secondary node via CPC configuration).

In recent years, for example, selective activation of a cell group has been discussed so that cells can be continuously changed when the communication apparatus moves at a high speed. In the selective SCG activation, even after the secondary node is changed to another secondary node due to the success of the CPC procedure, the secondary node can be further changed based on the CPC configuration stored by the communication apparatus without an instruction from the master node.

### Citation List

### Non Patent Literature

Non Patent Literature 1: 3GPP TS 37.340 V17.3.0 "NR; Multi-connectivity; Overall description; Stage-2"

### Summary of Invention

A master node according to a first aspect is a master node connected to a communication apparatus. The master node comprises a controller configured to control a procedure for the communication apparatus to perform a conditional PS cell change based on a primary secondary (PS) cell configuration, a receiver configured to receive a radio resource control (RRC) reconfiguration complete message based on the conditional PS cell change from the communication apparatus, and a transmitter. In the procedure, the transmitter is configured to transmit a modification request message to a source secondary node when the receiver receives the RRC reconfiguration complete message and the source secondary node is a candidate secondary node, and is configured to transmit a release request message to the source secondary node when the receiver receives the RRC reconfiguration complete message and the source secondary node is not a candidate secondary node.

A communication method according to a second aspect is a communication method performed by a master node connected to a communication apparatus. The communication method comprises the steps of receiving a radio resource control (RRC) reconfiguration complete message based on a conditional PS cell change based on a primary secondary (PS) cell configuration from the communication apparatus, transmitting a modification request message to a source secondary node when the RRC reconfiguration complete message is received and the source secondary node is a candidate secondary node, and transmitting a release request message to the source secondary node when the RRC reconfiguration complete message is received and the source secondary node is not a candidate secondary node.

### Brief Description of Drawings

Objects, features, advantages, and the like of the present disclosure will become more apparent from the following detailed description with reference to the accompanying drawings.
Fig. 1 is a diagram illustrating a configuration of a mobile communication system according to an embodiment.
Fig. 2 is a diagram illustrating a configuration example of a protocol stack in the mobile communication system according to the embodiment.
Fig. 3 is a diagram illustrating an overview of a dual connectivity (DC) according to the embodiment.
Fig. 4 is a diagram illustrating a configuration example of a user equipment (UE) according to the embodiment.
Fig. 5 is a diagram illustrating a configuration of a base station according to the embodiment.
Fig. 6 is a sequence diagram (part 1) illustrating a first operation example of a mobile communication system according to an embodiment.
Fig. 7 is a sequence diagram (part 2) illustrating the first operation example of the mobile communication system according to the embodiment.
Fig. 8 is a sequence diagram illustrating a second operation example of the mobile communication system according to the embodiment.
Fig. 9 is a sequence diagram illustrating a third operation example of the mobile communication system according to the embodiment.
Fig. 10 is a flowchart illustrating a fourth operation example of the mobile communication system according to the embodiment.
Fig. 11 is a sequence diagram illustrating a fifth operation example of the mobile communication system according to the embodiment.
Fig. 12 is a sequence diagram illustrating a sixth operation example of the mobile communication system according to the embodiment.
Fig. 13 is a sequence diagram illustrating a seventh operation example of the mobile communication system according to the embodiment.

### Description of Embodiments

A mobile communication system according to an embodiment will be described with reference to the drawings. In the description of the drawings, the same or similar parts are denoted by the same or similar reference numerals.

In the current 3GPP technical specification, in the selective activation, when the communication apparatus changes the secondary node to the target secondary node based on the CPC configuration, it is assumed that the master node transmits a release request message to a related node other than the target secondary node. Here, when receiving the release request message, the related node releases the resource associated with the communication apparatus. However, when the communication apparatus subsequently accesses the node, there is a concern that the access cannot be accepted due to the release of the resource based on the release request message, and the selective activation is not appropriately performed. Therefore, an object of the present invention is to provide a base station and a communication method capable of appropriately performing selective activation.

### (Configuration of Mobile Communication System)

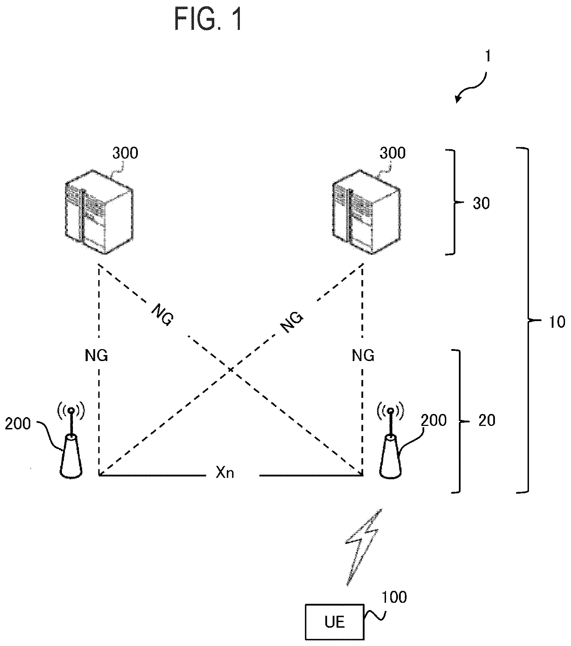

A configuration of a mobile communication system 1 according to an embodiment will be described with reference to Fig. 1. The mobile communication system 1 is, for example, a system conforming to the 3GPP technical specification (TS). Hereinafter, as the mobile communication system 1, a description will be given, as an example, as to the 5th generation system (5GS) of the 3GPP standard, that is, a mobile communication system based on a new radio (NR).

The mobile communication system 1 includes a network 10 and a user equipment (UE) 100 that communicates with the network 10. The network 10 includes a next generation radio access network (NG-RAN) 20, which is a 5G radio access network, and a 5G core network (5GC) 30, which is a 5G core network.

The UE 100 is an example of a communication apparatus. The UE 100 may be an apparatus used by a user. The UE 100 may be a user equipment defined in the 3GPP technical specification. The UE 100 is, for example, a mobile apparatus such as a mobile phone terminal such as a smartphone, a tablet terminal, a laptop PC, a communication module, or a communication card. The UE 100 may be a vehicle (for example, a car or a train) or an apparatus provided in the vehicle. The UE 100 may be a transport body other than a vehicle (for example, a ship or an airplane) or an apparatus provided in the transport body. The UE 100 may be a sensor or an apparatus provided in the sensor. Note that the UE 100 may be referred to as another name such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit. Furthermore, the UE 100 is an example of a terminal, and the terminal may include a factory device or the like.

The NG-RAN 20 includes a plurality of base stations 200. Each base station 200 manages at least one cell. A cell forms a minimum unit of a communication area. For example, one cell belongs to one frequency (a carrier frequency) and is formed by one component carrier. The term "cell" may represent a radio communication resource, and may also represent a communication target of the UE 100. Each base station 200 can perform radio communication with the UE 100 existing in its own cell. The base station 200 communicates with the UE 100 by using a protocol stack of a RAN. The base station 200 is connected to another base station 200 (which may also be referred to as a neighboring base station) via an Xn interface. The base station 200 communicates with the neighboring base station via the Xn interface. Furthermore, the base station 200 provides NR user plane and control plane protocol terminations towards the UE 100 and is connected to the 5GC 30 via an NG interface. Such a base station 200 of NR may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a feature specialized for user plane processing. The AMF and the UPF are connected to the base station 200 via the NG interface.

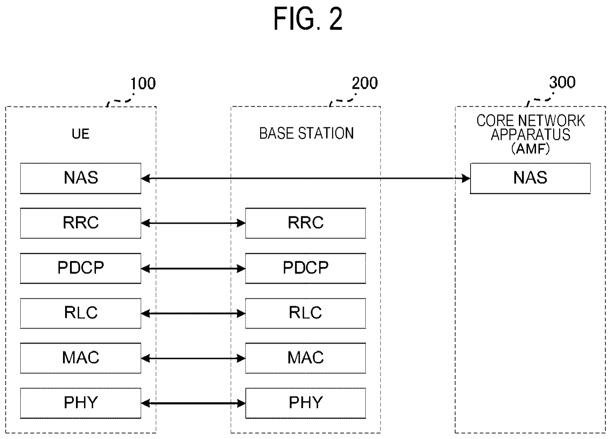

A configuration example of the protocol stack in the mobile communication system 1 according to the embodiment will be described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and a radio resource control (RRC) layer.

The PHY layer performs encoding and decoding, modulation and demodulation, antenna mapping and demapping, and resource mapping and demapping. Data and control information are transmitted between the PHY layer of the UE 100 and the PHY layer of the base station 200 via a physical channel.

The physical channel includes a plurality of OFDM symbols in the time domain and a plurality of subcarriers in the frequency domain. One subframe includes the plurality of OFDM symbols in the time domain. A resource block is a resource allocation unit, and includes the plurality of OFDM symbols and a plurality of subcarriers. A frame can be composed of 10 ms, and can include 10 subframes composed of 1 ms. A number of slots corresponding to a subcarrier spacing may be included in the subframe.

Among the physical channels, a physical downlink control channel (PDCCH) plays a central role for purposes such as, for example, downlink scheduling allocation, uplink scheduling grant, and transmission power control. For example, the UE 100 performs blind decoding of the PDCCH using a cell-radio network temporary identifier (C-RNTI) and a modulation and coding scheme-C-RNTI (MCS-C-RNTI) or a configured scheduling-RNTI (CS-RNTI) allocated from the base station 200 to the UE 100, and acquires a DCI that has been successfully decoded as a DCI addressed to its own UE. Here, a CRC parity bit scrambled by the C-RNTI and the MCS-C-RNTI or the CS-RNTI is added to the DCI transmitted from the base station 200.

In the NR, the UE 100 can use a bandwidth narrower than a system bandwidth (that is, the bandwidth of the cell). The base station 200 configures a bandwidth part (BWP) of consecutive PRBs in the UE 100. The UE 100 transmits and receives data and a control signal on an active BWP. In the UE 100, for example, a maximum of four BWPs can be configured. The BWPs may have different subcarrier spacings or may have frequencies overlapping each other. In a case where a plurality of BWPs is configured for the UE 100, the base station 200 can designate which BWP is to be activated by control in downlink. As a result, the base station 200 can dynamically adjust the UE bandwidth according to the amount of data traffic of the UE 100 and the like, and can reduce the UE power consumption.

The base station 200 can configure, for example, a maximum of three control resource sets (CORESETs) in each of a maximum of four BWPs on a serving cell. The CORESET is a radio resource for control information to be received by the UE 100. A maximum of 12 CORESETs may be configured on the serving cell in the UE 100. Each CORESET has indices 0 to 11. For example, the CORESET includes six resource blocks (PRB) and one, two, or three consecutive OFDM symbols in the time domain.

The MAC layer performs data priority control, retransmission processing by hybrid ARQ (HARQ), a random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size, modulation and coding scheme (MCS)) and resources to be allocated to the UE 100.

The RLC layer transmits data to the RLC layer on a reception side by using the features of the MAC layer and the PHY layer. Data and control information are transmitted between the RLC layer of the UE 100 and the RLC layer of the base station 200 via a logical channel.

The PDCP layer performs header compression and decompression and encryption and decryption.

A service data adaptation protocol (SDAP) layer may be provided as an upper layer of the PDCP layer. The service data adaptation protocol (SDAP) layer performs mapping between an IP flow that is a unit in which a core network performs quality of service (QoS) control and a radio bearer that is a unit in which an access stratum (AS) performs QoS control.

The RRC layer controls the logical channel, the transport channel, and the physical channel in response to establishment, reestablishment, and release of the radio bearer. RRC signaling for various configurations is transmitted between the RRC layer of the UE 100 and the RRC layer of the base station 200. In a case where there is an RRC connection between the RRC of the UE 100 and the RRC of the base station 200, the UE 100 is in an RRC connected state. In a case where there is no RRC connection between the RRC of the UE 100 and the RRC of the base station 200, the UE 100 is in an RRC idle state. In a case in where an RRC connection between the RRC of the UE 100 and the RRC of the base station 200 is suspended, the UE 100 is in an RRC inactive state.

A NAS layer located above the RRC layer performs session management and mobility management of the UE 100. NAS signaling is transmitted between the NAS layer of the UE 100 and the NAS layer of the core network apparatus 300 (AMF). Note that the UE 100 has an application layer and the like in addition to the protocol of the radio interface.

### (Overview of DC)

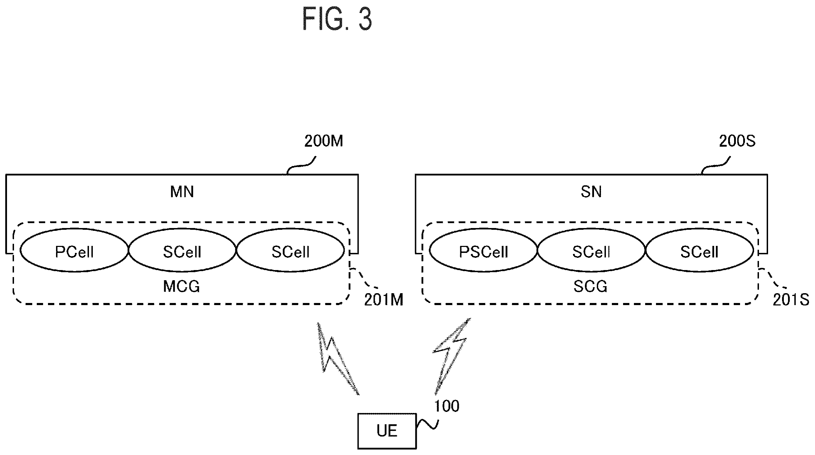

An overview of dual connectivity (DC) according to the embodiment will be described with reference to Fig. 3.

In the DC, the UE 100 performs simultaneous communication with a master cell group (MCG) 201M managed by a master node (MN) 200M and a secondary cell group (SCG) 201S managed by a secondary node (SN) 200S. The MN 200M may be an NR base station (gNB) or an LTE base station (eNB). The MN 200M is also referred to as a master base station. The master node may be referred to as an M-NG-RAN node. The SN 200S may be an NR base station (gNB) or an LTE base station (eNB). The SN 200S is also referred to as a secondary base station. The secondary node may be referred to as an S-NG-RAN node.

For example, the MN 200M transmits a designated message (for example, an SN addition request message) to the SN 200S, and the MN 200M transmits an RRC reconfiguration message to the UE 100, so that the DC is initiated.

The UE 100 in the RRC connected state is allocated radio resources from schedulers of the MN 200M and the SN 200S connected to each other via a network communicator of the backhaul, and performs radio communication by using the radio resources of the MN 200M and the radio resources of the SN 200S. The network communicator between the MN 200M and the SN 200 may be an Xn interface or an X2 interface. The MN 200M and the SN 200 communicate with each other via the network communicator.

The MN 200M may have a control plane connection with the core network. The MN 200M provides main radio resources of the UE 100. The MN 200M manages the MCG 201M. The MCG 201M is a group of serving cells associated with the MN 200M. The MCG 201M includes a primary cell (PCell), and optionally includes one or more secondary cells (SCells).

The SN 200S may not have a control plane connection with the core network. The SN 200S provides additional radio resources to the UE 100. The SN 200S manages the SCG 201S. The SCG is associated with the SN 200S. The SCG 201S includes a primary secondary cell (PS cell), and optionally includes one or more SCells. Note that the PCell of the MCG 201M and the PS cell of the SCG 201S are also referred to as special cells (SpCells).

The 3GPP technical specification defines primary secondary cell (PS cell) change. As one procedure of changing the PS cell, there is a conditional PS cell change (CPC) procedure. The UE 100 can change a candidate secondary node among the plurality of candidate secondary nodes to the candidate secondary node that controls a cell in which the execution condition is fulfilled based on the configuration related to the plurality of candidate secondary nodes (hereinafter, referred to as CPC configuration as appropriate). As a result, the UE 100 can switch the secondary node from the source secondary node to the target secondary node without an instruction from the master node.

Here, in the current 3GPP technical specification, when the UE 100 changes the secondary node (source secondary node) to another secondary node (target secondary node) based on the CPC configuration, the master node transmits a release request message (specifically, SN Release Request message) for requesting release of the resource associated with the UE 100 to a related node (for example, a source secondary node and a potential secondary node that could be a target secondary node via CPC configuration) other than the target secondary node.

In recent years, for example, selective activation of a cell group has been discussed so that cells can be continuously changed when the UE 100 moves at a high speed. In the selective SCG activation, even after the secondary node is changed to another secondary node due to the success of the CPC procedure, the secondary node can be further changed based on the configuration (for example, CPC configuration) stored by the UE 100 without an instruction from the master node.

In the current 3GPP technical specification, in the selective activation, when the UE 100 changes the secondary node to the target secondary node based on the CPC configuration, it is assumed that the master node transmits a release request message to a related node other than the target secondary node.

Here, when receiving the release request message, the related node releases the resource associated with the UE 100. However, when the UE 100 subsequently accesses the node, there is a concern that the access cannot be accepted due to the release of the resource based on the release request message, and the selective activation is not appropriately performed. Therefore, an operation for enabling the selective activation to be appropriately performed will be described.

### (Configuration of User Equipment)

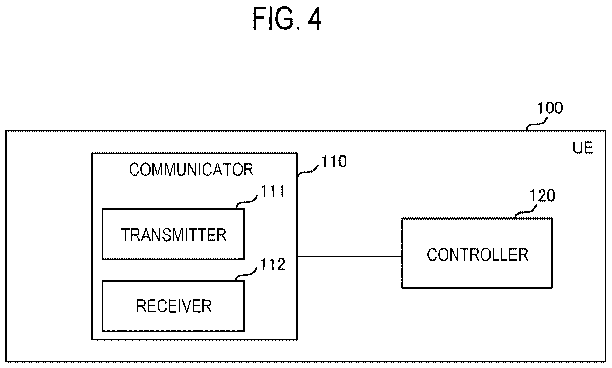

A configuration of the UE 100 according to the embodiment will be described with reference to Fig. 4. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may include a plurality of antennas and RF circuits. The antenna converts a signal into a radio wave and emits the radio wave into a space. Furthermore, the antenna receives a radio wave in a space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described below may be an operation under the control of the controller 120. The controller 120 may include at least one processor capable of executing a program and a memory that stores the program. The processor may execute the program to perform the operation of the controller 120. The controller 120 may include a digital signal processor that performs digital processing of a signal transmitted and received via the antenna and the RF circuit. The digital processing includes processing of the protocol stack of the RAN. Note that the memory stores a program to be executed by the processor, parameters related to the program, and data related to the program. The memory may include at least one of a read only memory (ROM), an erasable programmable read only memory (EPROM), an electrically erasable programmable read only memory (EEPROM), a random access memory (RAM), and a flash memory. All or part of the memory may be included in the processor.

In the UE 100 configured in this manner, the receiver 112 receives a radio resource control (RRC) message including a conditional PS cell change (CPC) configuration and determination information for the UE 100 to determine whether or not to release the CPC configuration, the CPC configuration being a configuration to change a primary secondary cell (PS cell), which is a primary cell of a secondary cell group, when a execution condition is fulfilled. The controller 120 determines whether or not to release the CPC configuration based on the determination information. As a result, the UE 100 can appropriately discard the CPC configuration based on the determination information.

### (Configuration of Base Station)

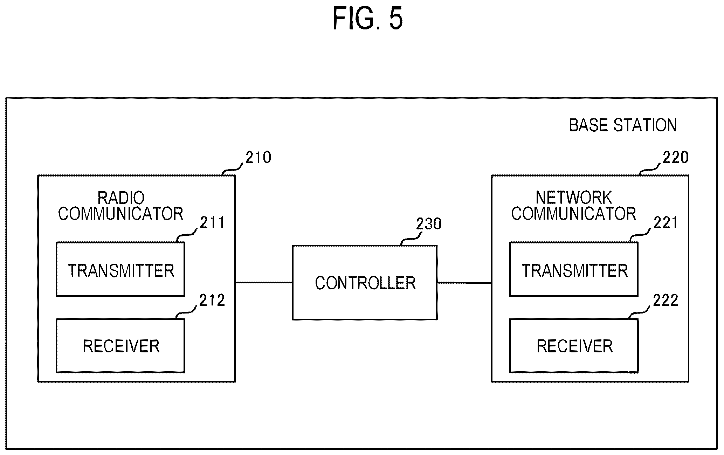

A configuration of the base station 200 according to the embodiment will be described with reference to Fig. 5. The base station 200 includes a radio communicator 210, a network communicator 220, and a controller 230.

For example, the radio communicator 210 receives a radio signal from the UE 100 and transmits a radio signal to the UE 100. The radio communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network communicator 220 transmits and receives a signal to and from the network. The network communicator 220 receives a signal from a neighboring base station connected via the Xn interface, which is an interface between base stations, for example, and transmits a signal to the neighboring base station. Furthermore, the network communicator 220 receives a signal from the core network apparatus 300 connected via the NG interface, for example, and transmits a signal to the core network apparatus 300. The network communicator 220 may include a transmitter 221 that transmits information such as a message to another node, and a receiver 222 that receives information such as a message from another node.

The controller 230 performs various types of control in the base station 200. The controller 230 controls, for example, communication with the UE 100 via the radio communicator 210. Furthermore, the controller 230 controls, for example, communication with a node (for example, the neighboring base station or the core network apparatus 300) via the network communicator 220. The operation of the base station 200 described above and described below may be an operation under the control of the controller 230. The controller 230 may include at least one processor capable of executing a program and a memory that stores the program. The processor may execute the program to perform the operation of the controller 230. The controller 230 may include a digital signal processor that performs digital processing of a signal transmitted and received via the antenna and the RF circuit. The digital processing includes processing of the protocol stack of the RAN. Note that the memory stores a program to be executed by the processor, parameters related to the program, and data related to the program. All or part of the memory may be included in the processor.

In a case where the base station 200 configured in this manner is the base station 200 that operates as the master node in the network 10 including the UE 100 that communicates with the master node and the secondary node, when the UE 100 having the configuration related to the plurality of candidate secondary nodes in the selective activation changes the secondary node from the source secondary node to the target secondary node, the transmitter 221 transmits the release request message for requesting the release of the resource to the release secondary node that does not store the resource associated with the UE 100 among the source secondary node and the plurality of candidate secondary nodes. When the UE 100 changes the secondary node, the controller 230 performs non-release control of not releasing the resource using the release request message to a non-release secondary node that stores the resource among the source secondary node and the plurality of candidate secondary nodes. As a result, when the UE 100 accesses the non-release secondary node, the resource is not released based on the release request message in the non-release secondary node, so that the selective activation can be appropriately performed.

Furthermore, in a case where the base station 200 is the base station 200 that can operate as a secondary node in a network including a communication apparatus that communicates with the master node and the secondary node, when the UE 100 having a configuration related to a plurality of candidate secondary nodes in the selective activation changes the secondary node from the source secondary node to the target secondary node, the receiver 222 receives, from the master node, a release request message for requesting release of a resource associated with the UE 100. When the base station is the candidate secondary node after the UE 100 having the configuration changes the secondary node, the controller 230 stops the release of the resource based on the release request message. As a result, when the UE 100 accesses the base station 200 by the selective activation, the release of the resource is not performed based on the release request message in the base station 200, so that the selective activation can be appropriately performed.

### (Operation Examples of Mobile Communication System)

Hereinafter, operation examples of the mobile communication system will be described. Note that description of the same contents as those already described may be omitted.

### (First Operation Example)

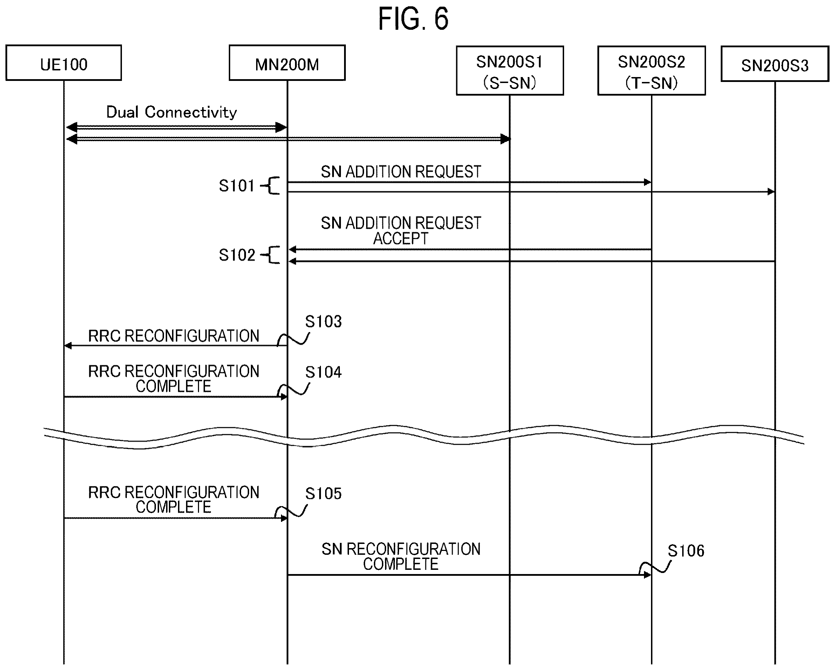

An operation example of the mobile communication system 1 according to the embodiment will be described with reference to Figs. 6 to 7. As illustrated in Fig. 6, it is assumed that DC by the UE 100, the MN 200M, and the source SN 200S1 is configured. In the initial stage of Fig. 6, the UE 100 communicates with the MCG of the MN 200M and the SCG of the SN 200S1. Hereinafter, communication between the UE 100 and the MCG (P cell) will be appropriately described as communication between the UE 100 and the MN 200M. Furthermore, similarly, communication between the UE 100 and each SCG (PS cell) will be appropriately described as communication between the UE 100 and each SN 200S.

As illustrated in Fig. 6, in step S101, the transmitter 221 of the MN 200M transmits an SN addition request message to each candidate target SN. In the present operation example, the candidate target SNs are SN 200S2 and SN 200S3. The receiver 222 of the SN 200S2 and the SN 200S3 receive the SN addition request message.

The controller 230 of the MN 200M may determine one or more candidate secondary nodes in the selective activation based on the measurement result from the UE 100. In the present operation example, the controller 230 of the MN 200M determines the SN 200S1, the SN 200S2, and the SN 200S3 as the candidate secondary nodes. When determining the candidate secondary node in the selective activation, the controller 230 of the MN 200M may perform control so that the operation of step S 101 is performed.

Note that the controller 230 may determine a candidate secondary node that is not a target of the selective activation. For example, the controller 230 may determine a normal candidate secondary node (for example, a candidate secondary node that is a target of conditional PSCell addition (CPA) and/or conditional PSCell change (CPC)).

Furthermore, the controller 230 of the MN 200M may determine whether or not to perform the selective activation. When performing the selective activation, the controller 230 may determine that all the candidate secondary nodes are targets of the selective activation. When not performing the selective activation, the controller 230 may determine that all the candidate secondary nodes are not targets of the selective activation.

Each controller 230 of the SN 200S2 and the SN 200S3 may determine, for example, whether or not the SN 200S2 and the SN 200S3 operate as a candidate secondary node in the selective activation. In the present operation example, each controller 230 determines that the SN 200S2 and the SN 200S3 operate as a candidate secondary node, and performs the processing of step S102.

Furthermore, each controller 230 of the SN 200S2 and the SN 200S3 store the resources of the UE 100. The resource may include context information of the UE 100. The resource may be a configuration (for example, configuration of RRC, configuration used for providing radio resources, and the like) for the UE 100 in each candidate secondary node.

Note that the controller 230 of the MN 200M may include information indicating a target of selective activation in the SN addition request message.

In step S102, the transmitter 221 of each candidate target SN transmits an SN addition request accept message to the MN 200M. The receiver 222 of the MN 200M receives the SN addition request accept message from each candidate target SN.

The controller 230 of each candidate target SN may include an RRC reconfiguration message including new SCG radio resource configuration in the SN addition request accept message.

In step S103, the transmitter 211 of the MN 200M transmits the RRC reconfiguration (RRCReconfiguration) message to the UE 100. The receiver 112 of the UE 100 receives the RRC reconfiguration message from the MN 200M.

The RRC reconfiguration message may include information of the configuration regarding a plurality of candidate secondary nodes in the selective activation. The information of the configuration may be configuration information used to configure a plurality of conditional reconfigurations in the UE 100. The plurality of conditional reconfigurations is for configuring a plurality of candidate target PS cells. Here, in a case where there are a plurality of candidate secondary nodes that control the candidate target PS cell, the information of the configuration indicates a configuration related to the plurality of candidate secondary nodes.

The configuration information may be information of the CPC configuration. The configuration information includes one or more pieces of conditional reconfiguration information. Each conditional reconfiguration information includes an RRC reconfiguration message applied when the execution condition is fulfilled. The configuration information may be a list of RRC reconfiguration messages associated with the execution condition. The RRC reconfiguration message included in the conditional reconfiguration information includes configuration information for configuring a candidate target PS cell.

The configuration information may include information (for example, "condExecutionCond", "condExecutionCondSCG", and the like) that configures a execution condition that needs to be fulfilled to trigger performance of the conditional reconfiguration.

Furthermore, the configuration information may include, for example, information (for example, an indicator) indicating whether or not to discard the configuration related to the selective activation. The indicator may indicate that the configuration is discarded, or may indicate that the configuration is stored. The information (indicator) may be an instruction common to all the SCGs. Alternatively, the controller 230 may associate the indicator with the candidate target PS cell (or the candidate secondary node). Note that the configuration may be, for example, the CPA configuration and/or the CPC configuration.

The controller 120 of the UE 100 applies an RRC reconfiguration complete message and stores the configuration information.

In step S104, the transmitter 111 of the UE 100 transmits the RRC reconfiguration complete message to the MN 200M. The receiver 212 of the MN 200M receives the RRC reconfiguration complete message from the UE 100.

Thereafter, the controller 120 of the UE 100 measures a radio signal from each cell. For example, the controller 120 of the UE 100 evaluates the execution condition based on the measurement result. Specifically, the controller 120 determines whether or not the execution condition (event) of the candidate target PS cell is fulfilled based on the measurement result. If the execution condition is fulfilled, the controller 120 of the UE 100 regards the target candidate cell associated with the fulfilled execution condition as a triggered cell. In a case where there is a plurality of triggered cells, the controller 120 selects one of the plurality of triggered cells for performance of conditional reconfiguration. In a case where the number of triggered cells is one, the controller 120 regards the cell as a cell selected for performance of conditional reconfiguration. The controller 120 initiates performance of the conditional reconfiguration for the selected cell and performs the following operation. In the present operation example, the controller 120 selects a cell controlled by the SN 200S2 and initiates performance of conditional reconfiguration. Since the SN 200S2 is a node different from the source secondary node, the SN 200S2 triggers a change of the secondary node.

The controller 120 of the UE 100 applies conditional reconfiguration information of the selected cell. As a result, the controller 120 of the UE 100 applies RRC reconfiguration included in the conditional reconfiguration information of the selected cell.

In step S105, the transmitter 111 of the UE 100 transmits an RRC reconfiguration complete message to the MN 200M. The receiver 212 of the MN 200M receives the RRC reconfiguration complete message from the UE 100. Note that the RRC reconfiguration complete message here is an RRC reconfiguration complete message based on a trigger for a change of the secondary node. On the other hand, the RRC reconfiguration complete message in step S 104 is not an RRC reconfiguration complete message based on the trigger for the change of the secondary node.

The controller 120 of the UE 100 may include designated information instructing performance (or non-performance) of non-release control to be described later in the RRC reconfiguration complete message. As a result, the transmitter 111 transmits the designated information to the network 10.

The controller 120 may include the designated information in a message terminating at the MN 200M. The designated information may be included in a field other than the message transmitted to the target SN through the MN 200M included in the RRC reconfiguration complete message. As a result, the transmitter 111 can transmit the designated information to the MN 200M by the message terminating at the MN 200M.

Note that the controller 120 may determine whether or not to perform the selective activation based on information indicating whether or not to discard the configuration related to the selective activation. For example, the controller 120 may determine to release the configuration based on whether or not information (for example, an indicator) indicating whether or not to discard the configuration has been received. For example, in a case where at least one of a message including an indicator for discarding the configuration or a message not including an indicator for storing the configuration has been received from the MN 200M, the controller 120 may determine to release the configuration. For example, in a case where at least one of a message including an indicator for storing the configuration or a message not including an indicator for discarding the configuration has been received from the MN 200M, the controller 120 may determine not to release the configuration. The indicator may be a common configuration for all the SCGs.

The message may be an RRC reconfiguration message. The message may be, for example, any of (a) an RRC reconfiguration message initially transmitted from the master node, (b) an RRC reconfiguration message including configuration information for the base station 200 operating as the master node (or the target master node) to initially configure, in the UE 100, a configuration related to the selective activation, and (c) an RRC reconfiguration message including a configuration for initiating the DC. The message may be referred to as an initial RRC reconfiguration message.

Furthermore, the indicator and the candidate target PS cell (or the candidate secondary node) may be associated with each other. In this case, the controller 120 may determine to release the configuration of the candidate secondary node (and/or the source secondary node) associated with the indicator that discards the configuration (or does not store the configuration). Furthermore, the controller 120 may determine not to release the configuration of the candidate secondary node (and/or the source secondary node) associated with the indicator that does not discard the configuration (or stores the configuration).

When determining to release all the configurations or target configurations based on the information indicating whether or not to discard the configurations, the controller 120 releases (discards) the configurations. When determining to store all the configurations or target configurations based on the information indicating whether or not to discard the configurations, the controller 120 stores the configurations without releasing the configurations.

In step S106, the transmitter 221 of the MN 200M transmits an SN reconfiguration complete message to the SN 200S2. The receiver 222 of the SN 200S2 receives the SN reconfiguration complete message from the MN 200M. As a result, the MN 200M notifies the SN 200S2 of the PS cell selected by the UE 100.

Note that the transmitter 221 of the MN 200M may perform the operation, for example, after any of steps S110 to S114 described later.

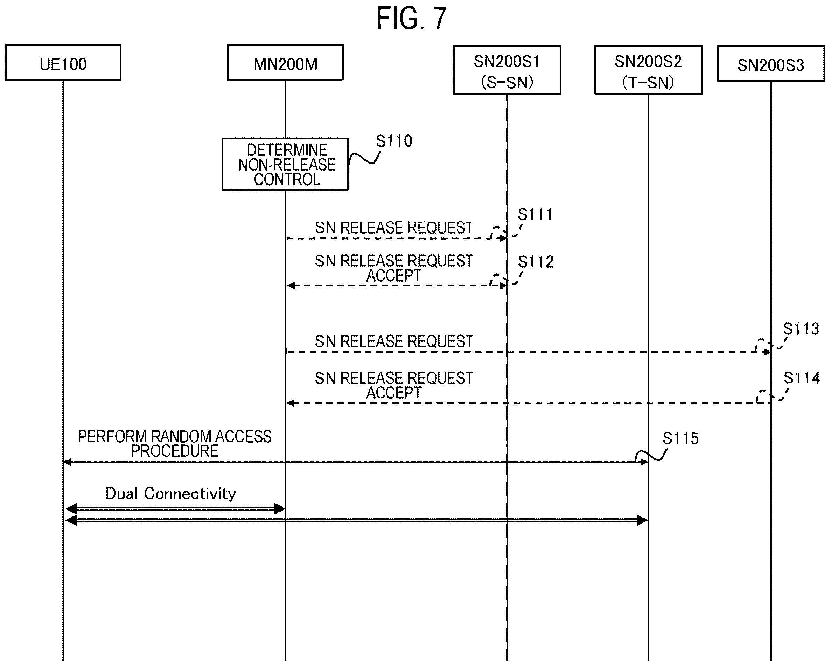

As illustrated in Fig. 7, in step S110, the controller 230 of the MN 200M determines the non-release control of not releasing the resource using the release request message to the non-release secondary node that stores the resource associated with the UE 100 among the source secondary node and the plurality of candidate secondary nodes. For example, the controller 230 may determine the non-release control for the source secondary node and each candidate secondary node. The controller 230 may determine the non-release control based on the reception of the RRC reconfiguration complete message in step S105.

The controller 230 may determine whether or not the UE 100 changes the secondary node from the source secondary node to the target secondary node. For example, when changing the PS cell from the cell controlled by the SN 200S1 to the cell controlled by the candidate secondary node, the controller 230 may determine to change the secondary node. When the UE 100 changes the secondary node, the controller 230 may determine whether or not non-release control is performed on each related node. The related node may be a node other than the target secondary node among the nodes related to the DC.

For example, the controller 230 may determine whether or not a source secondary node (in the present operation example, SN 200S 1) that is a related node is a candidate secondary node in the selective activation. For example, in a case where the SN 200S3 is a candidate secondary node in the selective activation, the controller 230 may determine to perform the non-release control.

The controller 230 may determine whether or not to perform the non-release control based on the RRC reconfiguration complete message. For example, in a case where the RRC reconfiguration complete message includes designated information, the controller 230 may determine to perform the non-release control based on the designated information. For example, in a case where the RRC reconfiguration complete message includes designated information instructing performance of the non-release control, the controller 230 may determine to perform the non-release control. Alternatively, in a case where the RRC reconfiguration complete message does not include designated information instructing non-performance of the non-release control, the controller 230 may determine to perform the non-release control. Furthermore, for example, in a case where the RRC reconfiguration complete message does not include designated information instructing performance of the non-release control, the controller 230 may determine not to perform the non-release control. Alternatively, in a case where the RRC reconfiguration complete message includes designated information instructing non-performance of the non-release control, the controller 230 may determine not to perform the non-release control.

For example, when receiving, from the SN 200S1, information indicating that the source secondary node (specifically, SN 200S 1) is a candidate secondary node in the selective activation, the controller 230 may determine to perform the non-release control. When receiving, from the SN 200S 1, information indicating that the SN 200S1 is not a candidate secondary node in the selective activation, the controller 230 may determine not to perform the non-release control. These pieces of information may be included in, for example, an SN change required (SN Change Required) message.

Furthermore, for example, the controller 230 may determine whether or not a candidate secondary node (in the present operation example, SN 200S3) is a candidate secondary node in the selective activation. For example, in a case where the SN 200S3 is a candidate secondary node in the selective activation, the controller 230 may perform the operation of step S113. The controller 230 may determine that the candidate secondary node that has transmitted the SN addition request message including the information indicating the target of the selective activation is the candidate secondary node in the selective activation. Note that the SN addition request message may be a message requesting preparation of a resource for DC operation for a specific UE.

Furthermore, the controller 230 may determine whether or not to perform the non-release control based on whether or not information (for example, an indicator) indicating whether or not to discard the configuration is transmitted to the UE 100, for example. As described below, when the configuration is released in the UE 100, the controller 230 may determine to perform the non-release control. On the other hand, when the configuration is stored in the UE 100, the controller 230 may determine not to perform the non-release control.

For example, in a case where at least one of a message including an indicator for discarding the configuration or a message not including an indicator for storing the configuration is transmitted to the UE 100, the controller 230 may determine to release the configuration. For example, in a case where at least one of a message including an indicator for storing the configuration or a message not including an indicator for discarding the configuration is transmitted to the UE 100, the controller 230 may determine not to release the configuration.

The indicator may be a common configuration for all the SCGs. In this case, when the controller 230 determines to release the configuration based on the presence or absence of transmission of the indicator, the processing of steps S111 and S113 may be performed. On the other hand, when the controller 230 determines not to release the configuration based on the presence or absence of transmission of the indicator, the processing of steps S111 and S113 may be skipped (omitted).

Furthermore, in a case where the indicator is associated with the candidate target PS cell (SCG) or the candidate secondary node, the controller 230 may determine whether or not to perform the non-release control for each candidate secondary node. The controller 230 may determine to release the configuration of the candidate secondary node (and/or the source secondary node) associated with the indicator that discards the configuration (or does not store the configuration). Furthermore, the controller 230 may determine not to release the configuration of the candidate secondary node (and/or the source secondary node) associated with the indicator that does not discard the configuration (or stores the configuration).

The controller 230 may perform the processing of step S111 on the source secondary node determined to release the configuration. On the other hand, the controller 230 may skip the processing of step S111 for the source secondary node determined not to release the configuration. Similarly, the controller 230 may perform the processing of step S113 on the candidate secondary node determined to release the configuration. On the other hand, the controller 230 may skip the processing of step S113 on the candidate secondary node determined not to release the configuration.

In step S111, the controller 230 performs non-release control on a candidate secondary node (referred to as a non-release secondary node as appropriate) to be subjected to the non-release control. The controller 230 determines not to transmit the release request message to the non-release secondary node as the non-release control. For example, in a case where the release request message is not transmitted, the controller 230 may skip (omit) the generation or transmission of the release message, or may stop the generation or transmission of the release message. For example, in a case where the SN 200S1, which is the source secondary node, is a non-release secondary node, the controller 230 stops transmitting the release request message to the SN 200S1. In this case, since the controller 230 of the SN 200S1 has not received the release request message, the resource of the UE 100 is not released.

The release request message may be an SN release request (SN Release Request) message for requesting release of a resource.

On the other hand, in a case where the SN 200S1 is not a non-release secondary node (that is, the secondary node is a release secondary node), the controller 230 performs control to transmit the release request message to the SN 200S1. As a result, the transmitter 221 transmits the release request message to the SN 200S1. The receiver 222 of the SN 200S1 receives the release request message.

In step S112, when accepting the release request message, the transmitter 221 of the SN 200S1 transmits a release request accept message to the MN 200M. The receiver 222 of the MN 200M receives the release request accept message from the SN 200S1. The SN 200S1 releases the resource of the UE 100 based on the release request message. Note that the release request accept message may be an SN release request accept message for confirming a request for changing the resource of the SN 200S for the specific UE (UE 100).

In step S113, similarly to step S111, the controller 230 performs non-release control on the non-release secondary node. For example, when the SN 200S3 is a non-release secondary node, the controller 230 stops transmitting the release request message to the SN 200S3, which is the candidate secondary node. In this case, since the controller 230 of the SN 200S3 has not received the release request message, the resource of the UE 100 is not released.

On the other hand, when the SN 200S3 is not a non-release secondary node (is a release secondary node), the controller 230 performs control to transmit the release request message to the SN 200S1. As a result, the transmitter 221 transmits the release request message to the SN 200S1. The receiver 222 of the SN 200S1 receives the release request message.

In step S114, similarly to step S112, when accepting the release request message, the transmitter 221 of the SN 200S3 transmits a release request accept message to the MN 200M. The receiver 222 of the MN 200M receives the release request accept message from the SN 200S3. The SN 200S3 releases the resource of the UE 100 based on the release request message.

In step S115, the UE 100 and the SN 200S2 perform a random access procedure. Thereafter, the UE 100 performs communication with (the MCG of) the MN 200M and (the SCG of) the SN 200S2 in the DC.

As described above, in the present operation example, when the UE 100 having the configuration related to the plurality of candidate secondary nodes in the selective activation changes the secondary node from the source secondary node to the target secondary node, the transmitter 221 of MN 200M transmits the release request message for requesting the release of the resource to the release secondary node that does not store the resource associated with the UE 100 among the source secondary node and the plurality of candidate secondary nodes. When the UE 100 changes the secondary node, the controller 230 of the MN 200M performs non-release control of not releasing the resource using the release request message to a non-release secondary node that stores the resource among the source secondary node and the plurality of candidate secondary nodes. As a result, when the UE 100 accesses the non-release secondary node, the resource is not released in the non-release secondary node, so that the selective activation can be appropriately performed.

Furthermore, the controller 230 of the MN 200M may determine not to transmit the release request message to the non-release secondary node as the non-release control. For example, the controller 230 may perform control to stop transmitting the release request message. As a result, since the non-release secondary node does not receive the release request message, the release of the resource based on the release request message is not performed, and the selective activation can be appropriately performed.

Furthermore, when receiving the RRC reconfiguration complete message based on the trigger for the change of the secondary node from the UE 100, the controller 230 of the MN 200M may determine whether or not to perform the non-release control. As a result, when receiving the RRC reconfiguration complete message from the UE 100, the controller 230 determines whether or not to perform the non-release control while the release request message is transmitted according to the existing 3GPP technical specification. When the non-release control is performed, the release of the resource based on the release request message is not performed, and the selective activation can be appropriately performed.

Furthermore, the RRC reconfiguration complete message may include designated information instructing performing non-release control. The controller 230 of the MN 200M may determine whether or not to perform the non-release control based on the designated information. As a result, the controller 230 can determine whether or not to perform the non-release control in consideration of the instruction of the UE 100.

Furthermore, the controller 230 may perform control not to transmit the release request message to (the source secondary node and/or the candidate secondary node that manages) the SCG corresponding to the UE 100 that has instructed to store (alternatively, that has not instructed to discard (release)) based on the information (for example, the above-described indicator) included in the RRC reconfiguration message.

### (Second Operation Example)

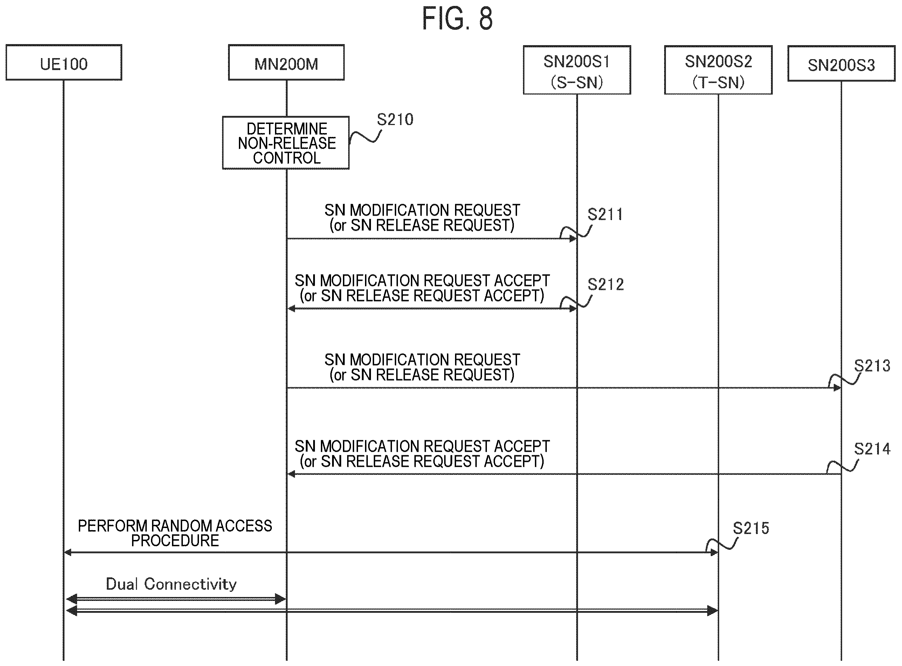

A second operation example of the mobile communication system 1 according to the embodiment will be described with reference to Fig. 8. The description of parts similar to those in the above-described operation examples will be omitted. In the present operation example, the MN 200M performs control, as the non-release control, to transmit, to the non-release secondary node, a designated message for storing at least context information of the UE 100 as a resource. Note that, in the present operation example, the designated information is a modification request message for requesting preparation for resource change.

Step S210 is similar to step S110.

In step S211, the controller 230 performs control to transmit a designated message to the non-release secondary node as the non-release control. In the present operation example, in a case where the SN 200S 1, which is the source secondary node, is a non-release secondary node, the controller 230 performs control to transmit a modification request message for requesting preparation for resource change as a designated message. As a result, the transmitter 221 transmits the modification request message to the SN 200S1. The receiver 222 of the SN 200S1 receives the modification request message.

Note that the modification request message may be, for example, an SN modification request (SN Modification Request) message. The SN modification request message may be a message for requesting preparation for changing a resource of a secondary node to a specific UE. The SN modification request message may be a message for querying a current SCG configuration. The SN modification request message may be a message for providing related information (for example, S-RLF-related information) to the secondary node.

On the other hand, in a case where the SN 200S1 is not a non-release secondary node (that is, SN 20051 is a release secondary node), the controller 230 performs control to transmit the release request message that is not a designated message to the SN 200S1. As a result, the transmitter 221 transmits the release request message to the SN 200S1. The receiver 222 of the SN 200S1 receives the release request message.

When receiving the modification request message, the controller 230 of the SN 200S1 may determine not to release the resource of the UE 100. On the other hand, when receiving the release request message, the controller 230 may determine to release the resource of the UE 100.

In step S212, when accepting the modification request message, the transmitter 221 of the SN 200S1 transmits a change request accept message to the MN 200M. The receiver 222 of the MN 200M receives the change request accept message from the SN 200S1. On the other hand, when accepting the release request message, the transmitter 221 of the SN 200S1 transmits a release request accept message to the MN 200M. The receiver 222 of the MN 200M receives the release request accept message from the SN 200S1.

In step 213, similarly to step 211, in a case where the SN 200S3, which is the candidate secondary node, is a non-release secondary node, the controller 230 performs control to transmit the modification request message as a designated message. As a result, the transmitter 221 transmits the modification request message to the SN 200S3. The receiver 222 of the SN 200S3 receives the modification request message.

On the other hand, in a case where the SN 200S3 is not a non-release secondary node, the controller 230 performs control to transmit the release request message that is not a designated message to the SN 200S3. As a result, the transmitter 221 transmits the release request message to the SN 200S3. The receiver 222 of the SN 200S3 receives the release request message.

When receiving the modification request message, the controller 230 of the SN 200S3 may determine not to release the resource of the UE 100. When not releasing the resource of the UE 100, the controller 230 stores at least context information of the UE 100. The controller 230 may store a configuration (for example, configuration of RRC, configuration used for providing radio resources, and the like) for the UE 100 in its own station as a resource. On the other hand, when receiving the release request message, the controller 230 may determine to release the resource of the UE 100.

In step S214, when accepting the modification request message, the transmitter 221 of the SN 200S3 transmits a change request accept message to the MN 200M. The receiver 222 of the MN 200M receives the change request accept message from the SN 200S3. On the other hand, when accepting the release request message, the transmitter 221 of the SN 200S3 transmits a release request accept message to the MN 200M. The receiver 222 of the MN 200M receives the release request accept message from the SN 200S3.

Step S215 is similar to step S115.

As described above, in the present operation example, the controller 230 of the MN 200M performs control, as the non-release control, to transmit, to the non-release secondary node, a designated message for storing at least context information of the UE 100 as a resource. As a result, the non-release secondary node can store at least the context information of the UE 100 as a resource. As a result, the selective activation can be appropriately performed as compared with the case of releasing the resource.

Furthermore, the controller 230 of the MN 200M performs control to transmit the modification request message as a designated message. As a result, in a case where the modification request message is an existing message, the effect on the mobile communication system can be reduced as compared with a case where a designated message is newly defined.

Furthermore, similarly to the first operation example, the controller 230 may perform control to transmit a designated message to (the source secondary node and/or the candidate secondary node that manages) the SCG corresponding to the UE 100 that has instructed to store (alternatively, that has not instructed to discard (release)) based on the information (for example, the above-described indicator) included in the RRC reconfiguration message.

### (Third Operation Example)

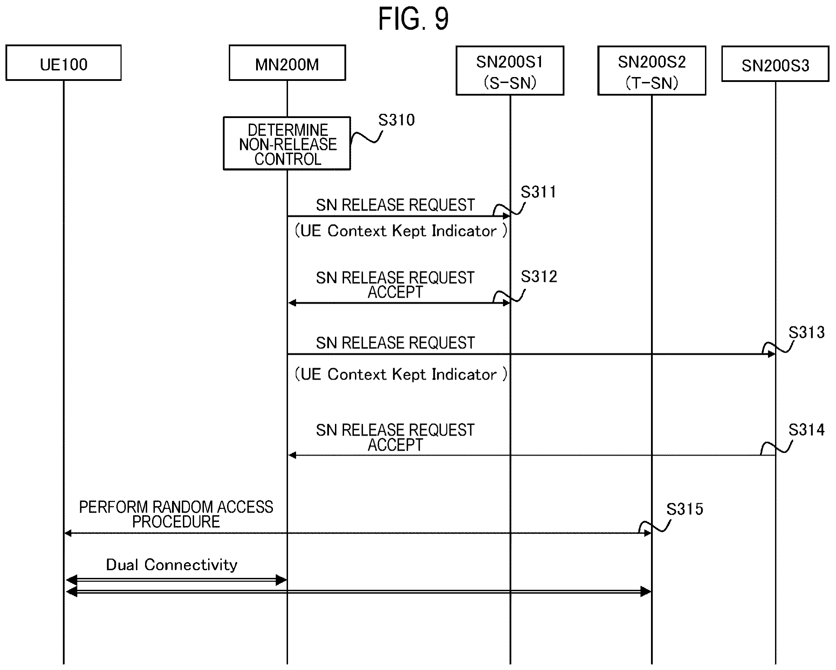

A third operation example of the mobile communication system 1 according to the embodiment will be described with reference to Fig. 9. The description of parts similar to those in the above-described operation examples will be omitted. In the present operation example, the MN 200M performs control, as non-release control, to transmit, to the non-release secondary node, a release message including an indicator indicating whether or not context information is stored in the non-release secondary node as a designated message.

Step S310 is similar to step S110.

In step S311, in a case where the SN 200S1, which is the source secondary node, is a non-release secondary node, the controller 230 performs control to transmit a release request message including an indicator indicating whether or not context information is stored in the non-release secondary node as a designated message. As a result, the transmitter 221 transmits the release request message to the SN 200S1. The receiver 222 of the SN 200S1 receives the release request message.

The indicator may be, for example, a UE context kept indicator (UE Context Kept Indicator). The UE context kept indicator may indicate whether or not the UE context is stored at the secondary node. In a case where the UE context kept indicator indicates that the UE context is stored (for example, "True"), the UE context kept indicator may be information that the secondary node initiates only release of resources associated with a UE-associated signaling connection (UE-associated signalling connection) between the master node and the secondary node. In a case where the UE context kept indicator does not indicate that the UE context is stored (for example, other than "True"), the UE context kept indicator may be information that the secondary node does not initiate release of that resource.

The controller 230 of the MN 200M may include an indicator indicating that the UE context is stored at the secondary node in the release request message. The controller 230 of the MN 200M may include an indicator indicating (for example, other than "True") other than that the UE context is stored at the secondary node in the release request message.

Furthermore, when transmitting the release request message including the indicator as the designated message, the controller 230 of the MN 200M may perform control to transmit information instructing to resume the provision of the resource to the non-release secondary node based on the context information. The controller 230 may include the information in the release request message including the indicator. The controller 230 may include the information in a message different from the release request message including the indicator, and the transmitter 221 may transmit the message to the SN 200S1 separately from the release request message.

On the other hand, in a case where the SN 200S1 is not a non-release secondary node, the controller 230 performs control to transmit the release request message not including an indicator to the SN 200S1. As a result, the transmitter 221 transmits the release request message to the SN 200S1. The receiver 222 of the SN 200S1 receives the release request message.

When receiving the release request message including the indicator, the controller 230 of the SN 200S1 may determine not to release the resource of the UE 100. On the other hand, when receiving the release request message not including the indicator, the controller 230 may determine to release the resource of the UE 100.

Furthermore, when receiving the information instructing to resume the provision of the resource based on the context information, the controller 230 of the SN 200S1 may resume the provision of the resource.

In step S312, when accepting the release request message, the transmitter 221 of the SN 200S1 transmits a release request accept message to the MN 200M. The receiver 222 of the MN 200M receives the release request accept message from the SN 200S1.

In step 313, similarly to step 211, in a case where the SN 200S3, which is the candidate secondary node, is a non-release secondary node, the controller 230 performs control to transmit the release request message including the indicator as a designated message. As a result, the transmitter 221 transmits the modification request message to the SN 200S3. The receiver 222 of the SN 200S3 receives the release request message including the indicator.

On the other hand, in a case where the SN 200S3 is not a non-release secondary node, the controller 230 performs control to transmit the release request message to the SN 200S3. As a result, the transmitter 221 transmits the release request message to the SN 200S3. The receiver 222 of the SN 200S3 receives the release request message.

When receiving the release request message including the indicator, the controller 230 of the SN 200S3 may determine not to release the resource of the UE 100. On the other hand, when receiving the release request message not including the indicator, the controller 230 may determine to release the resource of the UE 100.

Note that, similarly to step S311, when transmitting the release request message including the indicator as the designated message, the controller 230 of the MN 200M may perform control to transmit information instructing to resume the provision of the resource to the SN 200S3 based on the context information. When receiving the information instructing to resume the provision of the resource based on the context information, the controller 230 of the SN 200S3 may resume the provision of the resource.

In step S314, when accepting the release request message, the transmitter 221 of the SN 200S3 transmits a release request accept message to the MN 200M. The receiver 222 of the MN 200M receives the release request accept message from the SN 200S3.

Step S315 is similar to step S115.

As described above, in the present operation example, the controller 230 of the MN 200M may perform control to transmit, as a designated message, a release request message including an indicator indicating whether or not context information is stored in the non-release secondary node. As a result, the non-release secondary node can store at least the context information of the UE 100 as a resource. As a result, the selective activation can be appropriately performed as compared with the case of releasing the resource.

Furthermore, when transmitting the release request message including the indicator as the designated message, the controller 230 of the MN 200M may perform control to transmit information instructing to resume the provision of the resource to the non-release secondary node based on the context information. As a result, the non-release secondary node resumes the provision of the resource based on the context information, so that the selective activation can be appropriately performed as compared with the case of releasing the resource.

### (Fourth Operation Example)

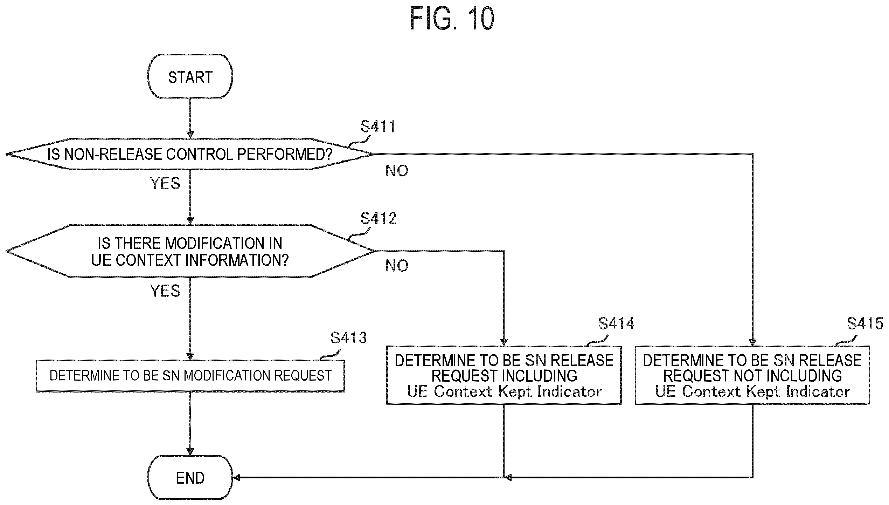

A fourth operation example of the mobile communication system 1 according to the embodiment will be described with reference to Fig. 10. The description of parts similar to those in the above-described operation examples will be omitted. In the present operation example, the MN 200M determines a designated message to be transmitted to the non-release secondary node from among a plurality of types of designated messages based on the change in the context information of the UE 100.

In step S411, the controller 230 of the MN 200M determines whether or not non-release control is performed for each related node (specifically, a source secondary node, a candidate secondary node, and the like). The controller 230 may make a determination in the same manner as in step S110.

If determining to perform the non-release control, the controller 230 may perform the processing of step S412. On the other hand, if determining not to perform the non-release control, the controller 230 may perform the processing of step S415.

In step S412, the controller 230 determines whether or not there is a modification in the UE context information in the related node. If there is a modification in the UE context information, the controller 230 performs the processing of step S413. On the other hand, if there is no modification in the UE context information, the controller 230 performs the processing of step S414.

In step S413, the controller 230 determines to transmit the SN modification request message as a designated message. In this case, an operation similar to the second operation example may be performed.

In step S414, the controller 230 determines to transmit the SN release request message including the above-described indicator (for example, UE Context Kept Indicator) as the designated message. In this case, an operation similar to the third operation example may be performed.

In step S415, the controller 230 determines to transmit the SN release request message not including the above-described indicator (for example, UE Context Kept Indicator) as the designated message. In this case, an operation similar to the third operation example may be performed.

As described above, in the present operation example, the controller 230 may determine a designated message to be transmitted to the non-release secondary node from among a plurality of types of designated messages based on the change in the context information of the UE 100. As a result, the controller 230 can properly use the designated message based on the change in the context information. The MN 200M can flexibly control the SN 200SN.

Furthermore, in a case where there is a change in the context information of the UE 100, the controller 230 may perform control to transmit a modification request message as a designated message. As a result, the controller 230 can explicitly notify the non-release secondary node that there is a change in the context information of the UE 100 by the modification request message.

Furthermore, in a case where there is no change in the context information, the controller 230 may perform control to transmit a release request message including an indicator as a designated message. As a result, the controller 230 can explicitly notify the non-release secondary node that there is no change in the context information of the UE 100 by the release request message including the indicator.

### (Fifth Operation Example)

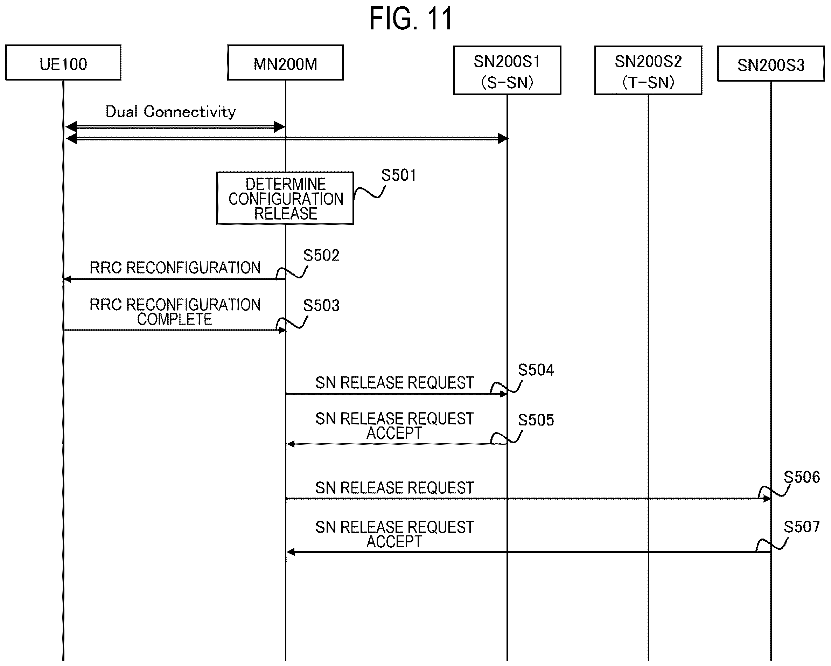

A fifth operation example of the mobile communication system 1 according to the embodiment will be described with reference to Fig. 11. The description of parts similar to those in the above-described operation examples will be omitted. In the present operation example, an operation in a case where at least some of the information of the configuration stored by the UE 100 is released will be described.

In step S501, the controller 230 of the MN 200M determines the configuration release. For example, the controller 230 may determine to release at least some of the information of the configuration by updating the configuration. For example, when notifying the UE 100 of a new configuration, the controller 230 may determine to update the configuration. Furthermore, the controller 230 may determine to update the configuration when a handover to another master node is performed. Furthermore, the controller 230 may determine to update the configuration when a SCG failure occurs. Note that the configuration here is a configuration related to at least the selective activation. The configuration may be, for example, the CPA configuration or the CPC configuration.

Note that the controller 230 may determine to release all the configurations (specifically, a configuration related to a plurality of candidate secondary nodes in the selective activation) stored by the UE 100, or may determine to release some of the configurations (for example, a configuration related to some candidate secondary nodes among the plurality of candidate secondary nodes in the selective activation).

The controller 230 may perform the processing of step S502 in a case where at least some of the configurations stored by the UE 100 is released. In this case, the controller 230 may perform a new configuration (a configuration related to a plurality of candidate secondary nodes in the selective activation) on the UE 100.

Note that the controller 230 may perform the processing of step S504 and/or step S506 before step S502 and step S503.

In step S502, the transmitter 211 of the MN 200M transmits an RRC reconfiguration message to the UE 100 to release at least some of the information of the configuration. The receiver 112 of the UE 100 receives the RRC reconfiguration message from the MN 200M.

The controller 120 of the UE 100 releases the corresponding configuration based on the configuration information (updated configuration information) included in the RRC reconfiguration message. The controller 120 may apply a new configuration based on the updated configuration information.

In step S503, the transmitter 111 of the UE 100 transmits an RRC reconfiguration complete message to the MN 200M. The receiver 212 of the MN 200M receives the RRC reconfiguration complete message from the UE 100.

In step S504, when at least some of the information of the configuration stored by the UE 100 is released, the controller 230 performs control to transmit the release request message to the corresponding secondary node associated with the released information among the source secondary node and the plurality of candidate secondary nodes. In this step, the controller 230 performs control to transmit the release request message to the source secondary node as the corresponding secondary node. As a result, the transmitter 221 of the MN 200M transmits the release request message to the SN 200S1. The receiver 222 of the SN 200S1 receives the release request message from the MN 200M.

When receiving the RRC reconfiguration complete message as a response to the RRC reconfiguration message in step S502, the controller 230 may perform the processing of steps S504 and/or S506.

In step S505, when accepting the release request message, the transmitter 221 of the SN 200S1 transmits a release request accept message to the MN 200M. The receiver 222 of the MN 200M receives the release request accept message from the SN 200S1. The SN 200S1 releases the resource of the UE 100 in response to the reception of the release request message.

In step S506, similarly to step S504, the controller 230 performs control to transmit the release request message to the candidate secondary node as the corresponding secondary node. As a result, the transmitter 221 of the MN 200M transmits the release request message to the SN 200S3. The receiver 222 of the SN 200S3 receives the release request message from the MN 200M.

In step S507, when accepting the release request message, the transmitter 221 of the SN 200S3 transmits a release request accept message to the MN 200M. The receiver 222 of the MN 200M receives the release request accept message from the SN 200S3. The SN 200S3 releases the resource of the UE 100 in response to the reception of the release request message.

As described above, when at least some of the information of the configuration stored by the UE 100 is released, the controller 230 of the MN 200M may perform control to transmit the release request message to the corresponding secondary node associated with the released information among the source secondary node and the plurality of candidate secondary nodes. As a result, when the selective activation is performed, when at least some of the information of the configuration stored by the UE 100 is released, it is possible to avoid the corresponding secondary node from continuing to store the resource of the UE 100, and the selective activation can be appropriately performed.

### (Sixth Operation Example)

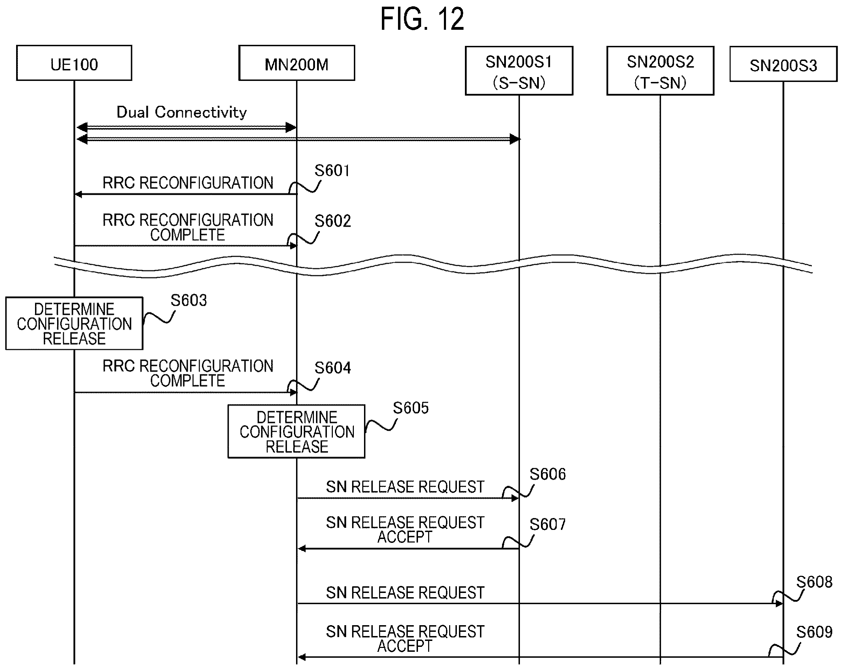

A sixth operation example of the mobile communication system 1 according to the embodiment will be described with reference to Fig. 12. The description of parts similar to those in the above-described operation examples will be omitted. In the present operation example, an operation in a case where at least some of the information of the configuration stored by the UE 100 is released at the timing related to the PS cell change will be described.

In step S601, similarly to step S103, the transmitter 211 of the MN 200M transmits the RRC reconfiguration message to the UE 100. The receiver 112 of the UE 100 receives the RRC reconfiguration message from the MN 200M.

Here, the controller 230 of the MN 200M may generate the RRC reconfiguration message including the release information related to the release of the configuration (that is, discard).

The release information may include, for example, information instructing to release the configuration when the PS cell change is changed regardless of whether or not a execution condition (event) based on the configuration is fulfilled. Furthermore, the release information may include information instructing to release the configuration when the execution condition (event) based on the configuration is fulfilled. Furthermore, the release information may include information instructing to release the configuration fulfilling the execution condition (event).

Furthermore, the release information may include, for example, count information indicating the number of times the UE 100 stores the configuration related to the selective activation. The release information may include timer information indicating a duration during which the UE 100 stores the configuration related to the selective activation. The release information may include event information indicating a condition under which the UE 100 releases the configuration related to the selective activation. The release information may be associated with the candidate target PS cell (or the candidate secondary node).

Step S602 is similar to step S104.

In step S603, the controller 120 of the UE 100 determines to release at least some of the information of the configuration related to the selective activation. For example, the controller 120 may determine whether or not to release at least some of the information of the configuration based on the release information.

For example, in a case where the release information includes information instructing to release the configuration when the PS cell is changed, regardless of whether or not the execution condition (event) based on the configuration is fulfilled, the controller 120 may determine to release at least some of the information of the configuration at the timing of changing the PS cell. Furthermore, in a case where the release information includes information instructing to release the configuration in which the execution condition (event) is fulfilled, the controller 120 may determine to release the configuration to the cell in which the execution condition (event) is fulfilled at the timing of changing the PS cell.

For example, the controller 120 may determine to release at least some of the information of the configuration based on the number of times the UE 100 stores the configuration related to the selective activation. Furthermore, the controller 120 may determine to release at least some of the information of the configuration based on whether or not a duration during which the UE 100 stores the configuration has expired. Furthermore, the controller 120 may determine to release at least some of the information of the configuration based on whether or not a condition for releasing the configuration is fulfilled.

When determining to release the configuration based on the release information, and in a case where the release information is associated with the candidate target PS cell (or the candidate secondary node), the controller 120 may determine to release the configuration of the associated candidate target PS cell (or the candidate secondary node).

When determining to release at least some of the information of the configuration related to the selective activation, the controller 120 may perform control to transmit an RRC reconfiguration complete message. The RRC reconfiguration complete message may be an RRC reconfiguration complete message based on a trigger for a change of the secondary node. Note that the controller 120 may transmit a message other than the RRC reconfiguration complete message. Note that, when determining to release at least some of the information of the configuration, the controller 120 may release at least some of the information of the configuration before transmitting the RRC reconfiguration complete message.

In step S604, the transmitter 111 of the UE 100 transmits an RRC reconfiguration complete message to the MN 200M. The receiver 212 of the MN 200M receives the RRC reconfiguration complete message from the UE 100.

The RRC reconfiguration message may include information indicating that the UE 100 determines to release at least some of the information of the configuration. The information may include information indicating the corresponding secondary node (or a cell of the corresponding secondary node).

In step S605, the MN 200M may determine whether or not to release the configuration based on the reception of the RRC reconfiguration message.

The controller 230 of the MN 200M may perform control to transmit a release request message to the corresponding secondary node, for example, when receiving, from the UE 100, an RRC reconfiguration complete message including information indicating that the UE 100 has determined to release at least some of the information of the configuration.

The controller 230 of the MN 200M may specify the corresponding secondary node based on the information. The controller 230 may perform the processing of the subsequent steps on the specified corresponding secondary node.

Furthermore, the controller 230 of the MN 200M may determine whether or not to perform the processing of the subsequent steps based on the release information transmitted to the UE 100.

For example, in a case where information instructing to release the configuration when the PS cell is changed is transmitted regardless of whether or not the execution condition (event) based on the configuration is fulfilled, the controller 230 may perform the processing of the subsequent steps based on reception of an RRC reconfiguration complete message based on a trigger for the PS cell change or a change of the secondary node (that is, it is based on the fact that the execution condition of the PS cell change is fulfilled).

For example, in a case where information instructing to release the configuration when the PS cell is changed is transmitted to the UE 100 regardless of whether or not the execution condition (event) based on the configuration is fulfilled, the controller 230 may perform the processing of the subsequent steps based on reception of an RRC reconfiguration complete message based on a trigger for the PS cell change or a change of the secondary node (that is, it is based on the fact that the execution condition of the PS cell change is fulfilled).

Furthermore, in a case where the information instructing to release the configuration in which the execution condition (event) is fulfilled transmitted to the UE 100, the controller 230 may determine not to perform the processing of the subsequent steps, that is, to perform the non-release control on the candidate secondary node (that is, the target secondary node) associated with the configuration in which the execution condition is fulfilled. Thereafter, when the SN 200S operating as the target secondary node becomes the source secondary node by the subsequent PS cell change, the controller 230 may perform the processing of the subsequent steps on the SN 200S. Furthermore, the controller 230 may determine not to perform the processing of the subsequent steps, that is, to perform the non-release control on the candidate secondary node associated with the configuration other than the configuration in which the execution condition is fulfilled.

The controller 230 may perform the processing of the subsequent steps on the candidate target PS cell (or the candidate secondary node) associated with the release information indicating the release. On the other hand, the controller 230 may determine not to perform the processing of the subsequent steps, that is, to perform non-release control on the candidate target PS cell (or the candidate secondary node) not associated with the release information indicating the release.

Steps S606 to S609 correspond to steps S504 to S507.

As described above, the controller 230 of the MN 200M may perform control to transmit a release request message to the corresponding secondary node, when receiving, from the UE 100, a message (for example, the RRC reconfiguration complete message) including information indicating that the UE 100 has determined to release at least some of the information of the configuration. As a result, even when the UE 100 autonomously determines to release at least some of the information of the configuration, the release request message is transmitted to the corresponding secondary node, so that it is possible to avoid the corresponding secondary node from continuing to store the resource of the UE 100, and the selective activation can be appropriately performed.

### (Seventh Operation Example)

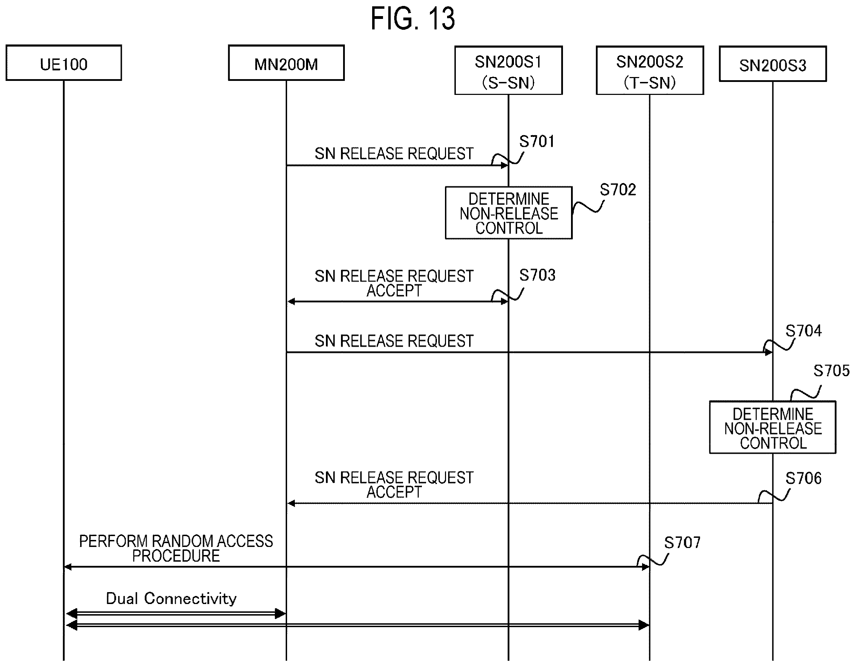

A seventh operation example of the mobile communication system 1 according to the embodiment will be described with reference to Fig. 13. The description of parts similar to those in the above-described operation examples will be omitted. In Fig. 13, since the operation before step S701 is the operation before step S110, the description thereof is omitted. Note that, in the present operation example, the SN 200 autonomously stops the release of the resource based on the release request message.

Note that, similarly to the above-described operation example, the UE 100 has a configuration related to a plurality of candidate secondary nodes in the selective activation.

In step S701, when the UE 100 having the above configuration changes the secondary node from the source secondary node to the target secondary node, the transmitter 221 of the MN 200M transmits the SN release request message to the SN 200S1. The receiver 222 of the SN 200S1 receives the SN release request message from the MN 200M. Note that, in the present operation example, the controller 230 of the MN 200M does not need to determine whether or not to perform the non-release control.

In step S702, the controller 230 of the SN 200S1 determines non-release control of stopping the release of the resource based on the release request message. The controller 230 of the SN 200S1 may determine to perform the non-release control when the SN 200S1 is the candidate secondary node after the UE 100 changes the secondary node. For example, in a case where the SN addition request message that has been received in advance includes information indicating that the node is a target of the selective activation, the controller 230 may determine that the SN 200S1 is the candidate secondary node and may determine to perform the non-release control. Alternatively, when the SN modification request message transmitted to the MN 200M includes information indicating that the SN 200S1 is the candidate secondary node in the selective activation, the controller 230 may determine that the SN 200S1 is the candidate secondary node and may determine to perform the non-release control.

On the other hand, the controller 230 of the SN 200S1 may determine to perform the non-release control when the SN 200S1 is not the candidate secondary node after the UE 100 changes the secondary node. For example, in a case where the SN addition request message that has been received in advance includes information indicating that the node is not a target of the selective activation, the controller 230 may determine that the SN 200S1 is not the candidate secondary node and may determine not to perform the non-release control. Alternatively, when the SN modification request message transmitted to the MN 200M does not include the information indicating that the SN 200S1 is the candidate secondary node in the selective activation, the controller 230 may determine that the SN 200S1 is not the candidate secondary node and may determine not to perform the non-release control.

When determining to perform the non-release control, the controller 230 of the SN 200S1 may stop the release of the resource based on the release request message (that is, the resource needs not be released). Therefore, the controller 230 may ignore the instruction based on the release request message. The controller 230 may skip (omit) the release of the resource. On the other hand, when determining not to perform the non-release control, the controller 230 releases the resource based on the release request message.

Step S703 is similar to step S312. Step S704 is similar to step S113. Note that, in the present operation example, the controller 230 of the MN 200M may perform the operation of step S704 without determining whether or not to perform the non-release control.

In step S705, similarly to step S702, the controller 230 of the SN 200S3 determines the non-release control.

Step S706 is similar to step S314. Step S707 is similar to step S115.

As described above, when the UE 100 having the configuration related to the plurality of candidate secondary nodes in the selective activation changes the secondary node from the source secondary node to the target secondary node, the receiver 222 of the SN 200S1 and the SN 200S3 receives the release request message for requesting release of the resource associated with the UE 100 from the master node. When the own station is the candidate secondary node after the UE 100 having the configuration changes the secondary node, the controller 230 of the SN 200S1 and the SN 200S3 stops the release of the resource based on the release request message. As a result, when the UE 100 accesses the SN 200S1 and the SN 200S3 by the selective activation, the release of the resource based on the release request message is not performed, and the selective activation can be appropriately performed.

### [Other Embodiments]

In the above-described embodiment, the modification request message (SN modification request message) and/or the release request message (SN release request message) have been described as examples of the designated message, but the designated message is not limited thereto. The designated message may be, for example, another message such as a new message. In this case, the designated message may include at least some of the information included in the release request message or at least some of the information included in the modification request message. As a result, in a case where the modification request message (SN modification request message) and the release request message (SN release request message) are existing messages, the effect on the mobile communication system can be reduced as compared with a case where a designated message is newly defined.

The operation sequence (and the operation flow) in the above-described embodiment may not necessarily be performed in time series according to the order described in the flowchart or the sequence diagram. For example, the steps in the operation may be performed in an order different from the order described in the flowchart or the sequence diagram, or may be performed in parallel. In addition, some of the steps in the operation may be removed or additional steps may be added to the processing. In addition, the operation sequence (and the operation flow) in the above-described embodiment may be performed separately and independently, or may be performed by combining two or more operation sequences (and operation flows). For example, some steps of one operation flow may be added to other operation flows, or some steps of one operation flow may be replaced with some steps of other operation flows.

In the above-described embodiments, the mobile communication system based on the NR is described as the example of the mobile communication system 1. However, the mobile communication system 1 is not limited to this example. The mobile communication system 1 may be a system conforming to a TS of long term evolution (LTE) or another generation system (for example, the 6th generation) of the 3GPP standard. The base station 200 may be an eNB that provides E-UTRA user plane and control plane protocol terminations toward the UE 100 in LTE. The mobile communication system 1 may be a system conforming to a TS defined in a standard other than the 3GPP standard. The base station 200 may be an integrated access and backhaul (IAB) donor or an IAB node.

A program for causing a computer to execute each processing to be performed by the UE 100 or the base station 200 may be provided. The program may be recorded in a computer readable medium. By using the computer readable medium, the program can be installed in the computer. Here, the computer readable medium in which the program is recorded may be a non-transitory recording medium. The non-transitory recording medium is not particularly limited, and may be, for example, a recording medium such as a compact disk read only memory (CD-ROM) or a digital versatile disc read only memory (DVD-ROM). Furthermore, a circuit that performs each processing to be performed by the UE 100 or the base station 200 may be integrated, and at least a part of the UE 100 or the base station 200 may be configured as a semiconductor integrated circuit (a chipset or a system on chip (SoC)).

In the above-described embodiment, the term "transmit" may mean performing processing of at least one layer in a protocol stack used for transmission, or may mean physically transmitting a signal in a wireless or wired manner. Alternatively, the term "transmit" may mean a combination of performing processing of at least one layer in a protocol stack used for transmission and physically transmitting a signal in a wireless or wired manner described above. Similarly, the term "receive" may mean performing processing of at least one layer in a protocol stack used for reception, or may mean physically receiving a signal in a wireless or wired manner. Alternatively, the term "receive" may mean a combination of performing processing of at least one layer in a protocol stack used for reception and physically receiving a signal in a wireless or wired manner described above. Similarly, the term "obtain/acquire" may mean obtaining/acquiring information from stored information, may mean obtaining/acquiring information from information received from another node, or may mean obtaining/acquiring information by generating the information. Similarly, the terms "based on" and "depending on/in response to" do not mean "only based on" or "only depending on/only in response to" unless explicitly stated otherwise. The term "based on" means both "only based on" and "at least partially based on". Similarly, the term "depending on/in response to" means both "only depending on/in response to" and "at least partially depending on/in response to". Similarly, the terms "include" and "comprise" do not mean including only enumerated items, but mean both including only enumerated items and including additional items in addition to the enumerated items. Similarly, in the present disclosure, the "or" does not mean exclusive OR but means OR. Moreover, any reference to elements using designations such as "first", "second", and the like used in the present disclosure does not generally limit the amount or order of those elements. These designations may be used in the present disclosure as a convenient method to distinguish between two or more elements. Therefore, references to first and second elements do not mean that only two elements can be employed therein or that the first element should precede the second element in any form. In the present disclosure, when articles such as a, an, and the in English are added by translation, these articles cover the plural meaning unless the context clearly indicates otherwise.

Although the present disclosure has been described in accordance with examples, it is understood that the present disclosure is not limited to the examples or structures. The present disclosure also includes various modified examples or modifications made within an equivalent range. In addition, various combinations or modes, or other combinations or modes including only one element, more elements, or less elements also fall within the scope and spirit of the present disclosure.

### (Supplementary Notes)

Features related to the above-described embodiments are additionally described.

### (Supplementary Note 1)

A base station (200) operating as a master node in a network including a communication apparatus (100) that communicate with the master node and a secondary node, the base station including:
a transmitter (221) configured to, when the communication apparatus having a configuration related to a plurality of candidate secondary nodes in selective activation changes a secondary node from a source secondary node to a target secondary node, transmit a release request message for requesting release of a resource to a release secondary node that does not store the resource associated with the communication apparatus among the source secondary node and the plurality of candidate secondary nodes; and
a controller (230) configured to perform non-release control of not releasing the resource using the release request message to a non-release secondary node that stores the resource among the source secondary node and the plurality of candidate secondary nodes when the communication apparatus changes the secondary node.

### (Supplementary Note 2)

The base station according to supplementary note 1, in which
the controller is configured to determine not to transmit the release request message to the non-release secondary node as the non-release control.

### (Supplementary Note 3)

The base station according to supplementary note 1, in which
the controller is configured to perform control, as the non-release control, to transmit a designated message for storing at least context information of the communication apparatus as the resource to the non-release secondary node.

### (Supplementary Note 4)

The base station according to supplementary note 3, in which
the controller is configured to perform control to transmit a modification request message for requesting preparation for a change of the resource as the designated message.

### (Supplementary Note 5)

The base station according to supplementary note 4, in which
the controller is configured to perform control to transmit the modification request message as the designated message in a case where there is a change in context information of the communication apparatus.

### (Supplementary Note 6)

The base station according to any one of supplementary notes 3 to 5, in which
the controller is configured to perform control to transmit the release request message as the designated message, the release request message including an indicator indicating whether or not the context information is stored in the non-release secondary node.

### (Supplementary Note 7)

The base station according to supplementary note 6, in which
the controller is configured to perform control to transmit the release request message including the indicator as the designated message in a case where there is no change in the context information.

### (Supplementary Note 8)

The base station according to supplementary note 6 or 7, in which
when the controller transmits the release request message including the indicator as the designated message, the controller is configured to perform control to transmit information instructing to resume provision of the resource to the non-release secondary node based on the context information.

### (Supplementary Note 9)

The base station according to any one of supplementary notes 3 to 8, in which
the designated message includes at least some of information included in the release request message or at least some of information included in a modification request message for requesting preparation of change of the resource.

### (Supplementary Note 10)

The base station according to any one of supplementary notes 3 to 9, in which
the controller is configured to determine the designated message to be transmitted to the non-release secondary node from among a plurality of types of designated messages based on a change in context information of the communication apparatus.

### (Supplementary Note 11)

The base station according to any one of supplementary notes 1 to 10, in which
when the controller receives a radio resource control (RRC) reconfiguration complete message based on a trigger for changing the secondary node from the communication apparatus, the controller is configured to determine whether or not to perform the non-release control.

### (Supplementary Note 12)

The base station according to supplementary note 11, in which
the RRC reconfiguration complete message includes designated information instructing performance of the non-release control, and
the controller is configured to determine whether or not to perform the non-release control based on the designated information.

### (Supplementary Note 13)

The base station according to any one of supplementary notes 1 to 13, in which
when at least some of information of the configuration stored by the communication apparatus is released, the controller is configured to perform control to transmit the release request message to a corresponding secondary node associated with the information to be released, among the source secondary node and the plurality of candidate secondary nodes.

### (Supplementary Note 14)

The base station according to supplementary note 13, in which
the controller is configured to perform control to transmit the release request message to the corresponding secondary node when at least some of information of the configuration is released by the update of the configuration.

### (Supplementary Note 15)

The base station according to supplementary note 13 or 14, in which
the controller is configured to perform control to transmit the release request message to the corresponding secondary node when the controller receives, from the communication apparatus, a message including information indicating that the communication apparatus has determined to release at least some of information of the configuration.

### (Supplementary Note 16)

A base station (200) that can operate as a secondary node in a network including a communication apparatus (100) that communicates with a master node and the secondary node, the base station including:
a receiver (221) configured to receive, from the master node, a release request message requesting release of a resource associated with the communication apparatus when the communication apparatus having a configuration related to a plurality of candidate secondary nodes in selective activation changes a secondary node from a source secondary node to a target secondary node; and
a controller (230) configured to stop release of the resource based on the release request message when the base station is the candidate secondary node after the communication apparatus having the configuration changes the secondary node.

### (Supplementary Note 17)

A communication method performed at a base station operating as a master node in a network including a communication apparatus that communicates with the master node and a secondary node, the communication method including the steps of:
when the communication apparatus having a configuration related to a plurality of candidate secondary nodes in selective activation changes a secondary node from a source secondary node to a target secondary node, transmitting a release request message for requesting release of a resource to a release secondary node among the source secondary node and the plurality of candidate secondary nodes, the release secondary node not storing the resource associated with the communication apparatus; and
when the communication apparatus changes the secondary node, performing non-release control of not releasing the resource using the release request message to a non-release secondary node among the source secondary node and the plurality of candidate secondary nodes, the non-release secondary node storing the resource.

### (Supplementary Note 18)

A communication method performed at a base station that can operate as a secondary node in a network including a communication apparatus that communicates with a master node and the secondary node, the base station including the steps of:
receiving, from the master node, a release request message requesting release of a resource associated with the communication apparatus when the communication apparatus having a configuration related to a plurality of candidate secondary nodes in selective activation changes a secondary node from a source secondary node to a target secondary node; and
stopping release of the resource based on the release request message when the base station is the candidate secondary node after the communication apparatus having the configuration changes the secondary node.

### (Supplementary Note 19)

A master node (200, 200M) connected to a communication apparatus (100), the master node including:
a controller (230) configured to control a procedure for the communication apparatus to perform a conditional PS cell change based on a primary secondary (PS) cell configuration;
a receiver (212) configured to receive a radio resource control (RRC) reconfiguration complete message based on the conditional PS cell change from the communication apparatus; and
a transmitter (221), in which
in the procedure, the transmitter is configured to transmit a modification request message to a source secondary node when the receiver receives the RRC reconfiguration complete message and the source secondary node is a candidate secondary node, and
is configured to transmit a release request message to the source secondary node when the receiver receives the RRC reconfiguration complete message and the source secondary node is not a candidate secondary node.

### (Supplementary Note 20)

The master node according to supplementary note 19, in which
the release request message includes information for determining whether or not the source secondary node releases only a resource related to connection of the communication apparatus between the master node and the source secondary node.

### (Supplementary Note 21)

The master node according to supplementary note 19 or 20, in which
the controller is configured to determine whether to store a resource of the communication apparatus in the source secondary node, and
the transmitter
is configured to transmit the modification request message to the source secondary node when the resource is stored, and
is configured to transmit the release request message to the source secondary node when the resource is released.

### (Supplementary Note 22)

The master node according to any one of supplementary notes 19 to 21, in which
the modification request message is used to request to change context information of the communication apparatus in the source secondary node.

### (Supplementary Note 23)

The master node according to any one of supplementary notes 19 to 22, in which
the release request message is used to request to release context information of the communication apparatus in the source secondary node.

### (Supplementary Note 24)

The master node according to any one of supplementary notes 19 to 23, in which
the conditional PS cell change is performed continuously without reconfiguration of the PS cell configuration from the master node.

### (Supplementary Note 25)

A communication method performed by a master node connected to a communication apparatus (100), the communication method including the steps of:
receiving a radio resource control (RRC) reconfiguration complete message based on a conditional PS cell change based on a primary secondary (PS) cell configuration from the communication apparatus;
transmitting a modification request message to a source secondary node when the RRC reconfiguration complete message is received and the source secondary node is a candidate secondary node; and
transmitting a release request message to the source secondary node when the RRC reconfiguration complete message is received and the source secondary node is not a candidate secondary node.

### (Supplementary Note 26)

The communication method according to supplementary note 25, in which
the release request message includes information for determining whether or not the source secondary node releases only a resource related to connection of the communication apparatus between the master node and the source secondary node.

### (Supplementary Note 27)

The communication method according to supplementary note 25 or 26, including the steps of:
determining whether to store a resource of the communication apparatus in the source secondary node;
transmitting the modification request message to the source secondary node when the resource is stored; and
transmitting the release request message to the source secondary node when the resource is released.

### (Supplementary Note 28)

The communication method according to any one of supplementary notes 25 to 27, in which
the modification request message is used to request to change context information of the communication apparatus in the source secondary node.

### (Supplementary Note 29)

The communication method according to any one of supplementary notes 25 to 28, in which
the release request message is used to request to release context information of the communication apparatus in the source secondary node.

### (Supplementary Note 30)

The communication method according to any one of supplementary notes 25 to 29, in which
the conditional PS cell change is performed continuously without reconfiguration of the PS cell configuration from the master node.

## Claims

1. A master node (200, 200M) connected to a communication apparatus (100), the master node comprising:
a controller (230) configured to control a procedure for the communication apparatus to perform a conditional primary secondary (PS) cell change based on a PS cell configuration;
a receiver (212) configured to receive, from the communication apparatus, a radio resource control (RRC) reconfiguration complete message based on the conditional PS cell change; and
a transmitter (221), wherein
the transmitter is configured to:
transmit in the procedure, a modification request message to a source secondary node in a case where the receiver receives the RRC reconfiguration complete message and the source secondary node is a candidate secondary node, and
transmit in the procedure, a release request message to the source secondary node in a case where the receiver receives the RRC reconfiguration complete message and the source secondary node is not the candidate secondary node.

2. The master node according to claim 1, wherein
the release request message includes information for determining whether or not the source secondary node releases only a resource related to connection of the communication apparatus between the master node and the source secondary node.

3. The master node according to claim 1 or 2, wherein
the controller is configured to determine whether to store or release a resource of the communication apparatus in the source secondary node, and
the transmitter
is configured to transmit the modification request message to the source secondary node in a case where the controller determines to store the resource of the communication apparatus, and
is configured to transmit the release request message to the source secondary node in a case where the controller determines to release the resource of the communication apparatus.

4. The master node according to claim 1 or 2, wherein
the modification request message is used to request to change context information of the communication apparatus in the source secondary node.

5. The master node according to claim 1 or 2, wherein
the release request message is used to request to release context information of the communication apparatus in the source secondary node.

6. The master node according to claim 1 or 2, wherein
the conditional PS cell change is performed continuously without reconfiguration of the PS cell configuration from the master node.

7. A communication method performed by a master node (200, 200M) connected to a communication apparatus (100), the communication method comprising the steps of:
receiving, from the communication apparatus, a radio resource control (RRC) reconfiguration complete message based on a conditional PS cell change based on a PS cell configuration;
transmitting a modification request message to a source secondary node in a case where the RRC reconfiguration complete message is received and the source secondary node is a candidate secondary node; and
transmitting a release request message to the source secondary node in a case where the RRC reconfiguration complete message is received and the source secondary node is not a candidate secondary node.

8. The communication method according to claim 7, wherein
the release request message includes information for determining whether or not the source secondary node releases only a resource related to connection of the communication apparatus between the master node and the source secondary node.

9. The communication method according to claim 7 or 8, comprising the steps of:
determining whether to store or release a resource of the communication apparatus in the source secondary node;
transmitting the modification request message to the source secondary node in a case where determining to store the resource of the communication apparatus; and
transmitting the release request message to the source secondary node in a case where determining to release the resource of the communication apparatus.

10. The communication method according to claim 7 or 8, wherein
the modification request message is used to request to change context information of the communication apparatus in the source secondary node.

11. The communication method according to claim 7 or 8, wherein
the release request message is used to request to release context information of the communication apparatus in the source secondary node.

12. The communication method according to claim 7 or 8, wherein
the conditional PS cell change is performed continuously without reconfiguration of the PS cell configuration from the master node.
